# EUROPÄISCHE PATENTSCHRIFT

(11) **EP 2 399 806 B1**
(45) Veröffentlichungstag und Bekanntmachung des Hinweises auf die Patenterteilung: **14.12.2016**
(21) Anmeldenummer: 11004925.1
(22) Anmeldetag: 16.06.2011
(51) Int. Cl.: B62D 25/04, B62D 25/08, B62D 23/00

(54) **Hintere Fahrzeugkarosserie**
Rear end car bodywork
Arrière de carrosserie pour véhicule

(30) Priorität: 23.06.2010 DE 102010024737
(43) Veröffentlichungstag der Anmeldung: 28.12.2011
(73) Patentinhaber: Volkswagen Aktiengesellschaft, 38440 Wolfsburg (DE)
(72) Erfinder: Schneider, Ralph, 38518 Gifhorn (DE); Dang, Tran Minh, 38440 Wolfsburg (DE)

(56) Entgegenhaltungen:
- WO-A1-01/28845
- WO-A2-03/057529
- CN-Y- 201 395 173
- DE-A1- 10 231 821
- DE-A1- 19 913 532
- DE-A1-102007 052 620

## Beschreibung

Die Erfindung betrifft eine Fahrzeugkarosserie, mit einem Versteifungsrahmen nach dem Oberbegriff des Patentanspruchs 1 der Erfindung.

Aus der DE 197 02 543 A1 ist eine Klappen- oder Türanordnung an einem Fahrzeug, mit einem umlaufenden geschlossenen Halterahmen bekannt, welcher durch ein geschlossenes Profil gebildet ist und als mit Funktionseinheiten komplettiertes Modul hinter den Radkästen am Fahrzeugaufbau anbringbar ist. Die DE 100 41 645 A1 beschreibt ein Verfahren zum Zusammenbau von Bauteilen, bei dem ein vorgefertigter umlaufend geschlossener Heckportalrahmen hinter den Radkästen mit einer Bodengruppe, mit Karosseriewänden und einem Dachelement verbunden wird. Die DE 199 13 532 A1 offenbart ebenfalls einen vorgefertigten umlaufenden geschlossenen Versteifungsrahmen, der seinerseits als Profilrahmen ausgeführt ist und aus einem unteren U-förmigen, stranggepressten und streckgebogenen Rahmenhauptteil, einem oberen, ebenfalls als Strangpressprofil ausgeführten Rahmenholm, und zwei als Gussteile ausgeführten Winkelverbindern besteht. Besagter Profilrahmen wird ebenfalls hinter den Radkästen mit der Fahrzeugkarosserie verbunden. Aus der DE 100 36 399 A1 ist weiterhin ein Heckbereich eines Fahrzeugs offenbart, bei welchem jeweils seitlich der Radhäuser ein Seitenteil angeordnet ist, welches in eine C-Säule übergeht und mit einem Dachquerträger fest verbunden ist. Aus der DE 101 09 784 A1 ist des Weiteren eine selbstragende Karosserie für einen Personenkraftwagen, mit einer im Bereich zwischen einer Fahrgastzelle und einem Kofferraum angeordneten Versteifungsstruktur bekannt, die sich über die Fahrzeugbreite erstreckt und die auf jeder Fahrzeugseite im Bereich eines Radkastens hochgezogen ist und sich oberhalb des Radkastens an einer Seitenwand abstützt. Aus der DE 10 2008 015 687 A1 ist eine C-Säule bekannt, welche in der Umgebung eines Hinterrades eines Fahrzeugs angeordnet ist. Besagte C-Säule ist mit einem Dachlängsträger an seinem oberen Abschnitt und mit einem hinteren Seitenelement und einem Seitenschweller an seinem unteren Abschnitt verbunden. Die C-Säule ist paarweise auf der linken und rechten Seite des Fahrzeugs vorgesehen und verfügt über einen U-förmigen Querschnitt. Zwischen den C-Säulen ist ein Dachquerträger an einem oberen Abschnitt der C-Säulen befestigt. Insoweit verfügen die C-Säulen an ihrem oberen Ende jeweils über eine Eintiefung, in welche ein Endabschnitt des Dachquerträgers mit einem winklig runden Querschnitt eingesetzt ist.

Die gattungsgemässe WO 01/28845 A1 beschreibt ferner eine Fahrzeugkarosserie, mit einem Versteifungsrahmen, der seinerseits als nach unten offener Rahmen ausgebildet ist sowie zum einen in Fahrzeugquerrichtung (y-Richtung) gesehen beidseitig der Fahrzeugkarosserie je eine Säulenstruktur, die auf einer bodennahen Stützstruktur der Fahrzeugkarosserie abgestützt und an derselben befestigt ist, und zum anderen einen Dachquerträger zur Abstützung eines Fahrzeugdaches aufweist, wobei der Versteifungsrahmen durch ein im Querschnitt nach Fahrzeug-außen offenes Hohlprofil gebildet ist, und wobei die Profilquerschnitte der Säulenstrukturen stufenlos in den Profilquerschnitt des Dachquerträgers übergehen. Aus der CN 201 395 173 Y sind überdies Säulenstrukturen bekannt, die durch ein im Querschnitt nach Fahrzeug-innen offenes Hohlprofil gebildet sind. Schließlich ist aus der DE 102 31 821 A1 ein als IHU-Bauteil ausgebildeter Heckversteifungsrahmen an einem Kraftfahrzeug mit im Querschnitt geschlossenem Profil bekannt, wobei Säulenstrukturen desselben stufenlos in einen Dachquerträger übergehen.

Aufgabe der Erfindung ist es, eine Fahrzeugkarosserie mit einem Versteifungsrahmen zu schaffen, welche unkompliziert und einfach in der Herstellung ist und erhöhten Anforderungen an die Steifigkeit, insbesondere auch an die Torsionssteifigkeit einer Fahrzeugkarosserie, insbesondere eines Personenkraftwagens, bei minimalem Einsatzgewicht gerecht wird.

Diese Auifgabe ist durch eine Fahrzeugkarosserie mit einem Versteifungsrahmen gemäss Anspruch 1 gelöst.

Eine Fahrzeugkarosserie mit einem derartigen Versteifungsrahmen entspricht in hohem Maße dem angestrebten Leichtbaukonzept. Durch die unmittelbare Anbindung des Versteifungsrahmens an die bodennahe Stützstruktur der Fahrzeugkarosserie ist eine hohe Steifigkeit, insbesondere auch Torsionssteifigkeit, der Fahrzeugkarosserie in dem in Rede stehend Abschnitt derselben gewährleistet. Der mehrteilig ausgebildete Versteifungsrahmen kann dabei aus separaten, nach verschiedenen Verfahren hergestellten Bauteilen zu dem in Rede stehenden Versteifungsrahmen zusammengesetzt sein. So können z. B. Blechformteile mit Gussteilen und/oder Strangpressteilen kombiniert sein. Insoweit bietet es sich beispielsweise an, die Säulenstrukturen als Blechformteile, die Knotenteile als Gussteile und den Dachquerträger als Strangpressteil auszubilden.

Die Unteransprüche beschreiben bevorzugte Weiterbildungen oder Ausgestaltungen der Erfindung.

Danach kann der Versteifungsrahmen durch einen heckseitig angeordneten Versteifungsrahmen gebildet sein. Der Versteifungsrahmen kann dann so ausgebildet sein, dass an demselben eine Heckklappe angebracht werden kann. Eine mit einem derartigen Versteifungsrahmen ausgebildete Fahrzeugkarosserie empfiehlt sich insbesondere für sogenannte Kurzheck-Fahrzeuge. Weiter kann vorgesehen sein, dass die Säulenstrukturen des Versteifungsrahmens jeweils auf einer bodennahen Stützstruktur in Form einer hinteren Radhausstruktur der Fahrzeugkarosserie abgestützt sind, was sich insbesondere vorteilhaft für den besagten heckseitig angeordneten Versteifungsrahmen eines Kurzheck Fahrzeugs anbietet und zu einer erhöhten Versteifung der Fahrzeugkarosserie in diesem Karosseriebereich führt.

Was das im Querschnitt nach Fahrzeug-innen offene Hohlprofil des Versteifungsrahmens an sich anbelangt, kann dasselbe vorteilhaft durch ein U- oder V-Profil gebildet sein. Derartige offene Hohlprofilquerschnitte lassen sich äußerst einfach und kostengünstig nach einem an sich bekannten Herstellungsverfahren darstellen. Die Erfindung beschränkt sich jedoch nicht auf diese Querschnitte, sondern erfasst jeden an sich bekannten geeigneten offenen Hohlprofilquerschnitt. Wie die Erfindung weiter vorsieht, ist der nach Fahrzeug-hinten abgestellte Flansch des Dachquerträgers zur schwenkbaren Befestigung der oben bereits erwähnten Heckklappe vorgesehen. Weiter vorteilhaft kann an der Vorderkante einer jeden Säulenstruktur des Versteifungsrahmens ein Seitenwandteil angeschlossen sein, woraus im Hinblick auf den Stand der Technik, der seinerseits Seitenteile vorsieht, die sich bis ganz nach Fahrzeug-hinten erstrecken, Kosten- und Gewichtseinsparungen zu verzeichnen sind. Ferner kann es sich als vorteilhaft erweisen, in dem im Querschnitt nach Fahrzeug-innen offenen Hohlprofil des Versteifungsrahmens ein oder mehrere Einbauteile und/oder eine oder mehrere Einbaukomponenten, wie Elektroleitungen, Bauteile eines Sicherheitsgurtsystems, Tongeber und/oder dgl. mehr, anzuordnen. Der Versteifungsrahmen bietet somit vorteilhaft zusätzlichen Bauraum bzw. Stauraum und erleichtert die Montage besagter Einbauteile und/oder Einbaukomponenten. Die Erfindung betrifft auch ein Fahrzeug, insbesondere einen Personenkraftwagen, mit einer Fahrzeugkarosserie der oben beschriebenen Art.

Die Erfindung wird nachstehend anhand eines in den Zeichnungen schematisch dargestellten Ausführungsbeispiels näher erläutert. Es zeigen:
- Fig. 1: den Heckbereich einer Fahrzeugkarosserie eines Kraftfahrzeugs, insbesondere Personenkraftwagens, in einer perspektivischen Ansicht von schräg hinten,
- Fig. 2: den Schnitt I-I nach Fig. 1,
- Fig. 3: die Ansicht "A" nach Fig. 1
- Fig. 4: die Frontansicht eines Kraftfahrzeugs mit einer erfindungsgemäß ausgebildeten Fahrzeugkarosserie, und
- Fig. 5: den Heckbereich der Fahrzeugkarosserie bestückt mit einer Heckklappe in einer perspektivischen Ansicht von schräg hinten .

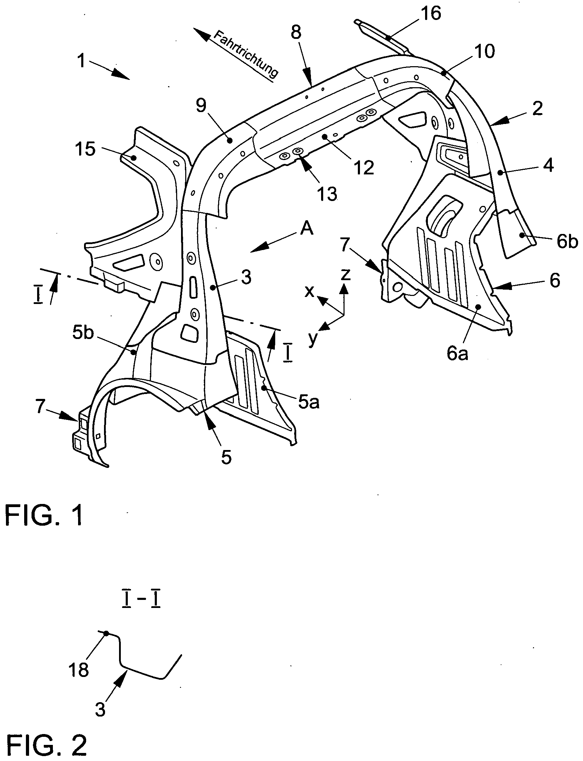

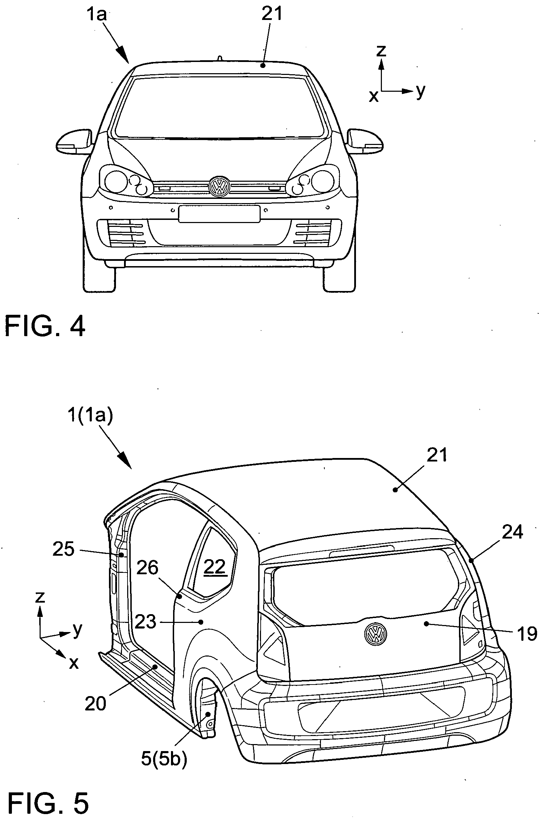

Die Fig. 1 und 5 zeigen demnach den Heckbereich einer Fahrzeugkarosserie 1 bzw. einer Rohbaukarosserie des in Fig. 4 äußerst schematisch in einer Frontansicht dargestellten Kraftfahrzeugs 1 a, hier eines Personenkraftwagens in einer Kurzheckvariante, mit einer Karosserieöffnung, die von einer an sich bekannten vertikal verschwenkbaren Heckklappe 19 verschlossen bzw. verschließbar ist.

Besagte Karosserieöffnung wird unter anderem durch einen Versteifungsrahmen 2 gebildet, der seinerseits vorliegend mehrteilig ausgebildet ist und in Fahrzeugquerrichtung (Y-Richtung) gesehen zum einen beidseitig der Fahrzeugkarosserie 1 je eine Säulenstruktur 3, 4 aufweist. Die Säulenstrukturen 3, 4 stützen sich ihrerseits jeweils auf einer hinteren Radhausstruktur 5, 6 ab und sind mit derselben vorzugsweise durch Schweißung fest verbunden.

Die Radhausstrukturen 5, 6 sind vorliegend jeweils zweischalig aus einem Radhaus-innen 5a, 6a und einem Radhaus-außen 5b, 6b gebildet und verfügen ferner über eine in Fahrtrichtung weisende Längsträgeranbindung 7 für einen in Fig. 5 gezeigten, an sich bekannten unteren Längsträger 20 einer Bodengruppe der Fahrzeugkarosserie 1.

Die Säulenstrukturen 3, 4 sind zum anderen mittels eines Dachquerträgers 8, der seinerseits bekanntermaßen der Abstützung eines an sich bekannten und in Fig. 4 und 5 gezeigten Fahrzeugdaches 21 dient, untereinander fest verbunden und bilden somit einen nach unten offenen Rahmen aus. Aufgrund des hohen Umformgrades im Anschlussbereich der Säulenstrukturen 3, 4 an den Dachquerträger 8 sind vorliegend Verbindungselemente in Form von separat hergestellten Knotenteilen 9, 10 vorgesehen, die jeweils einenends mit der benachbarten Säulenstruktur 3, 4 und anderenends mit dem benachbarten Ende des Dachquerträgers 8 fest verbunden sind, vorzugsweise durch Schweißung.

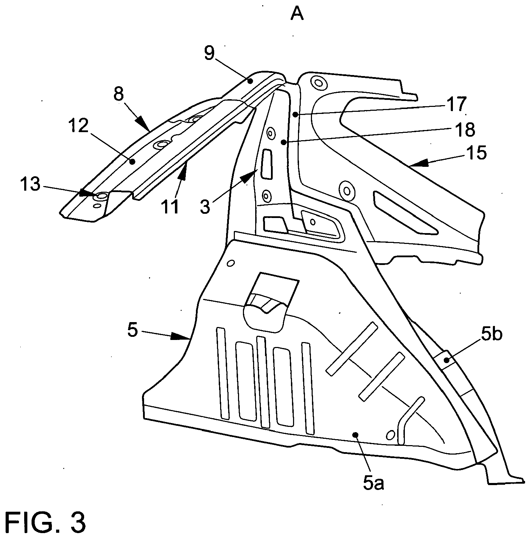

Wie insbesondere Fig. 2 zu entnehmen ist, ist der Versteifungsrahmen 2 überwiegend durch ein im Querschnitt nach Fahrzeug-innen offenes Hohlprofil gebildet. Im Wesentlichen gehen dabei die Profilquerschnitte der Säulenstrukturen 3, 4 unter Vermittlung der Knotenteile 9, 10 weitestgehend stufenlos in den Profilquerschnitt des Dachquerträgers 8 über (vgl. insbes. Fig. 1 und 3). Insoweit wird unter "stufenlos" verstanden, dass die jeweils benachbarten Stoßkanten der Profilquerschnitte der Säulenstrukturen 3, 4, der Knotenteile 9, 10 und des Dachquerträgers 8 bündig aneinander anschließen und eine gemeinsame plane Oberfläche ausbilden, auf welcher das Fahrzeugdach 21 aufliegt. Die Verbindung der Profile der Säulenstrukturen 3, 4, der Knotenteile 9, 10 und des Dachquerträgers 8 untereinander kann beispielsweise durch endseitiges axiales Ineinanderstecken oder Ineinanderlegen der besagten Profile in Kombination mit an sich bekannten, geeigneten Fügemaßnahmen, wie insbesondere Punktschweißen, erfolgen.

Wie der Fig. 2 weiter zu entnehmen ist, ist vorliegend für den Versteifungsrahmen 2 ein U-Profil gewählt. Die Erfindung beschränkt sich jedoch nicht auf besagtes U-Profil, sondern erfasst jedweden an sich bekannten geeigneten offenen Hohlprofilquerschnitt, beispielsweise einen hier nicht näher dargestellten V-Profilquerschnitt.

Gemäß den Fig. 1 und 3 sind sowohl das Hohlprofil des Dachquerträgers 8 als auch die Hohlprofile der beiden Knotenteile 9, 10 einstückig mit abgestellten Flanschen 11, 12 ausgebildet, wobei die Flansche 11 im Wesentlichen der Versteifung des Dachquerträgers 8 und die Flansche 12 sowohl der Versteifung als auch der Abstützung und Befestigung von nicht näher dargestellten Schwenklagern der Heckklappe 19 dienen. Im abgestellten Flansch 12 des Dachquerträgers 8 sind bereits Bohrungen 13 zur Festlegung besagter Schwenklager eingearbeitet.

Wie den Fig. 1 bis 3 noch zu entnehmen ist, ist an der Vorderkante 14 einer jeden Säulenstruktur 3, 4 des Versteifungsrahmens 2 ein Seitenwandteil 15, 16 vorzugsweise durch Schweißung angeschlossen, indem ein vorbereiteter Schweißflansch 17 des Seitenwandteils 15, 16 mit einem abgestellten Schweißflansch 18 der benachbarten Säulenstruktur 3, 4 korrespondiert. Besagtes Seitenwandteil 15, 16 ist vorliegend durch ein an sich bekanntes inneres Seitenwandteil 15, 16 gebildet, welches einen Fensterausschnitt 22 (vgl. insbes. auch Fig. 5) für ein nicht zeichnerisch dargestelltes hinteres Seitenfenster ausbildet. Die besagten inneren Seitenwandteile 15, 16 bilden des Weiteren jeweils mit einem in Fig. 5 dargestellten, an sich bekannten äußeren Seitenwandteil 23, 24 eine äußerst stabile und verwindungssteife Tragstruktur in Form eines im Querschnitt offenen oder geschlossenen Hohlprofils aus, indem dieselben im Bereich zueinander korrespondierender Schweißflansche untereinander vorzugweise durch Punktschweißung fest verbunden werden. Die Seitenwandteile 15, 16; 23, 24 können im Hinblick auf eine an sich bekannte Blechschalenbauweise aus umgeformten Blechplatinen gebildete Strukturteile ausbilden. Ebenso kann es auch angezeigt sein und ist durch die Erfindung mit erfasst, mittels der Seitenwandteile 15, 16; 23, 24 an sich bekannte Spaceframe-Strukturen auszubilden, bei denen eines der Strukturteile durch ein Blechteil und das andere Strukturteil durch ein Metallgussteil gebildet ist (nicht zeichnerisch dargestellt).

Der durch ein im Querschnitt nach Fahrzeug-innen offenes Hohlprofil gebildete Versteifungsrahmen 2 bietet vorteilhaft zusätzlichen Bauraum bzw. Stauraum für ein oder mehrere Einbauteile und/oder eine oder mehrere Einbaukomponenten, wie beispielsweise Elektroleitungen, Bauteile eines Sicherheitsgurtsystems, Tongeber und/oder dgl. mehr (nicht näher dargestellt). Ferner erleichtert ein derartiger Versteifungsrahmen 2 die Montage besagter Einbauteile und/oder Einbaukomponenten.

Das oben näher beschriebene Ausführungsbeispiel stellt auf einen mehrteiligen Versteifungsrahmen 2 ab, der aus separat hergestellten Bauteilen in Form zweier Säulenstrukturen 3, 4, eines Dachquerträgers 8 und zweier dieselben untereinander verbindender Knotenteile 9, 10 zusammengesetzt ist. Wie bereits oben näher erläutert, kann ein solcher Aufbau nach verschiedenen Verfahren hergestellte Bauteile umfassen. So können beispielsweise Blechformteile mit Gussteilen und/oder Strangpressteilen kombiniert sein (siehe oben).

Die Erfindung beschränkt sich jedoch nicht auf einen heckseitig angeordneten Versteifungsrahmen 2, dessen Säulenstrukturen 3, 4 auf hinteren Radhausstrukturen 5, 6 der Fahrzeugkarosserie 1 abgestützt sind, sondern erfasst auch einen Versteifungsrahmen 2 der gattungsgemäßen Art, der sich an anderer Stelle der Fahrzeugkarosserie 1 als im Heckbereich derselben ausbilden lässt. So bietet es sich gemäß Fig. 5 beispielsweise auch im Bereich der A-Säule 25 und der B-Säule 26 der Fahrzeugkarosserie 1 an, einen derartigen Versteifungsrahmen 2 auszubilden. Bezogen auf die A-Säule 25 setzt sich der Versteifungsrahmen 2 dann aus besagten in Fahrzeugquerrichtung (Y-Richtung) gesehen gegenüberliegend angeordneten und erfindungsgemäß profilierten A-Säulen 25 und einem ebenfalls erfindungsgemäß profilierten, jedoch an sich bekannten und vorliegend im Detail nicht näher dargestellten vorderen Dachquerträger zusammen. Die erfindungsgemäß profilierten A-Säulen 25 stützen sich mittel- oder unmittelbar an bodennahen Stützstrukturen, vorliegend in Form der Längsträger 20 ab. Ähnlich kann es sich bei einem Versteifungsrahmen 2 der gattungsgemäßen Art im Bereich der B-Säule 26 verhalten, indem dieselben ebenfalls mit einem hier nicht näher dargestellten Dachquerträger besagten Versteifungsrahmen 2 ausbilden, der erfindungsgemäß profiliert ausgebildet ist. Durch die Vielzahl der möglichen Varianten zur verbesserten Aussteifung der Fahrzeugkarosserie 1 mittels eines oder mehrerer der erfindungswesentlichen Versteifungsrahmen 2 kann in Abhängigkeit von den an die Fahrzeugkarosserie 1 gestellten Anforderungen bei minimiertem Gewicht und minimierter Bauteileanzahl eine hohe Steifigkeit derselben, insbesondere Verwindungssteifigkeit, erzielt werden.

### Bezugszeichenliste

- 1: Fahrzeugkarosserie
- 1a: Kraftfahrzeug
- 2: Versteifungsrahmen
- 3: Säulenstruktur
- 4: Säulenstruktur
- 5: Radhausstruktur
- 5a: Radhaus-innen
- 5b: Radhaus-außen
- 6: Radhausstruktur
- 6a: Radhaus-innen
- 6b: Radhaus-außen
- 7: Längsträgeranbindung
- 8: Dachquerträger
- 9: Knotenteil
- 10: Knotenteil
- 11: Flansch
- 12: Flansch
- 13: Bohrungen
- 14: Vorderkante (Säulenstruktur 3, 4)
- 15: inneres Seitenwandteil
- 16: inneres Seitenwandteil
- 17: Schweißflansch (Seitenwandteil 15, 16)
- 18: Schweißflansch (Säulenstruktur 3, 4)
- 19: Heckklappe
- 20: Längsträger
- 21: Fahrzeugdach
- 22: Fensterausschnitt
- 23: äußeres Seitenwandteil
- 24: äußeres Seitenwandteil
- 25: A-Säule
- 26: B-Säule

## Patentansprüche

1. Fahrzeugkarosserie (1), mit einem Versteifungsrahmen (2), der seinerseits als nach unten offener Rahmen ausgebildet ist sowie zum einen in Fahrzeugquerrichtung (Y-Richtung) gesehen beidseitig der Fahrzeugkarosserie (1) je eine Säulenstruktur (3, 4), die auf einer bodennahen Stützstruktur der Fahrzeugkarosserie (1) abgestützt und an derselben befestigt ist, und zum anderen einen Dachquerträger (8) zur Abstützung eines Fahrzeugdaches (21) aufweist, wobei der Versteifungsrahmen (2) durch ein im Querschnitt offenes Hohlprofil gebildet ist, wobei die Profilquerschnitte der Säulenstrukturen (3, 4) unter Vermittlung eines Knotenteiles (9, 10) stufenlos in den Profilquerschnitt des Dachquerträgers (8) übergehen, **dadurch gekennzeichnet, dass** das Hohlprofil ein im Querschnitt nach Fahrzeug-innen offenes Holhprofil ist und, dass sowohl das Hohlprofil des Dachquerträgers (8) als auch die Hohlprofile der beiden Knotenteile (9, 10) einstückig mit abgestellten Flanschen (11, 12) sowohl nach Fahrzeugvorn als auch nach Fahrzeug-hinten ausgebildet sind.

2. Fahrzeugkarosserie (1) nach Anspruch 1, **dadurch gekennzeichnet, dass** der Versteifungsrahmen (2) durch einen heckseitig angeordneten Versteifungsrahmen (2) gebildet ist.

3. Fahrzeugkarosserie (1) nach Anspruch 1 oder 2, **dadurch gekennzeichnet, dass** die Säulenstrukturen (3, 4) des Versteifungsrahmens (2) jeweils auf einer bodennahen Stützstruktur in Form einer hinteren Radhausstruktur (5, 6) der Fahrzeugkarosserie (1) abgestützt sind.

4. Fahrzeugkarosserie (1) nach einem der Ansprüche 1 bis 3, **dadurch gekennzeichnet, dass** das im Querschnitt nach Fahrzeug-innen offene Hohlprofil des Versteifungsrahmens (2) durch ein U- oder V-Profil gebildet ist.

5. Fahrzeugkarosserie (1) nach einem der Ansprüche 1 bis 4, **dadurch gekennzeichnet, dass** der nach Fahrzeug-hinten abgestellte Flansch (12) des Dachquerträgers (8) zur schwenkbaren Befestigung einer Heckklappe (19) vorgesehen ist.

6. Fahrzeugkarosserie (1) nach einem der Ansprüche 1 bis 5, **dadurch gekennzeichnet, dass** an der Vorderkante (14) einer jeden Säulenstruktur (3, 4) des Versteifungsrahmens (2) ein Seitenwandteil (15, 16) angeschlossen ist.

7. Fahrzeugkarosserie (1) nach einem der Ansprüche 1 bis 6, **dadurch gekennzeichnet, dass** in dem im Querschnitt nach Fahrzeug-innen offenen Hohlprofil des Versteifungsrahmens (2) ein oder mehrere Einbauteile und/oder eine oder mehrere Einbaukomponenten, wie Elektroleitungen, Bauteile eines Sicherheitsgurtsystems, Tongeber und/oder dgl. mehr, angeordnet sind.

8. Fahrzeug, insbesondere Personenkraftwagen, mit einer Fahrzeugkarosserie (1) nach einem der Ansprüche 1 bis 7.

## Claims

1. Vehicle body (1) having a stiffening frame (2) which for its part is configured as a downwardly open frame and has both a pillar structure (3, 4) on each of the two sides of the vehicle body (1) as seen in the vehicle transverse direction (Y direction), said pillar structures (3, 4) being supported on and fastened to a vehicle body (1) supporting structure close to the ground, and also a roof cross member (8) for supporting a vehicle roof (21), wherein the stiffening frame (2) is formed by a cross-sectionally open hollow profile, wherein the profile cross sections of the pillar structures (3, 4) transition smoothly into the profile cross section of the roof cross member (8) via a junction part (9, 10), **characterized in that** the hollow profile is a hollow profile that is cross-sectionally open towards the vehicle interior, and **in that** both the hollow profile of the roof cross member (8) and the hollow profiles of the two junction parts (9, 10) are formed integrally with protruding flanges (11, 12) both towards the front and towards the rear of the vehicle.

2. Vehicle body (1) according to Claim 1, **characterized in that** the stiffening frame (2) is formed by a stiffening frame (2) arranged at the rear-end side.

3. Vehicle body (1) according to Claim 1 or 2, **characterized in that** the pillar structures (3, 4) of the stiffening frame (2) are each supported on a supporting structure close to the ground in the form of a rear wheel arch structure (5, 6) of the vehicle body (1).

4. Vehicle body (1) according to one of Claims 1 to 3, **characterized in that** that hollow profile of the stiffening frame (2) that is cross-sectionally open towards the vehicle interior is formed by a U or V profile.

5. Vehicle body (1) according to one of Claims 1 to 4, **characterized in that** that flange (12) of the roof cross member (8) that protrudes towards the rear of the vehicle is intended for the pivotable fastening of a tailgate (19).

6. Vehicle body (1) according to one of Claims 1 to 5, **characterized in that** a side-wall part (15, 16) is attached to the front edge (14) of each pillar structure (3, 4) of the stiffening frame (2).

7. Vehicle body (1) according to one of Claims 1 to 6, **characterized in that** one or more installation parts and/or one or more installation components, such as electrical lines, components of a safety belt system, tone generators and/or the like, are arranged **in that** hollow profile of the stiffening frame (2) that is cross-sectionally open towards the vehicle interior.

8. Vehicle, in particular passenger vehicle, having a vehicle body (1) according to one of Claims 1 to 7.

## Revendications

1. Carrosserie de véhicule (1), comprenant un châssis de rigidification (2) qui est réalisé pour sa part sous forme de châssis ouvert vers le bas, et qui présente d'une part, vu dans la direction transversale du véhicule (direction Y), des deux côtés de la carrosserie du véhicule (1), à chaque fois une structure de colonne (3, 4) qui est supportée sur une structure de support proche du sol de la carrosserie du véhicule (1) et qui est fixée à celle-ci, et d'autre part une traverse de toit (8) pour supporter un toit de véhicule (21), le châssis de rigidification (2) étant formé par un profilé creux ouvert en section transversale, les sections transversales du profilé des structures de colonne (3, 4) se prolongeant en continu par l'intermédiaire d'une partie formant noeud (9, 10) dans la section transversale de profilé de la traverse de toit (8), **caractérisée en ce que** le profilé creux est un profilé creux de section transversale ouverte vers l'intérieur vers le véhicule, et **en ce que** le profilé creux de la traverse de toit (8) ainsi que les profilés creux des deux parties formant noeud (9, 10) sont réalisés d'une seule pièce avec des brides saillantes (11, 12) à la fois vers l'avant du véhicule et vers l'arrière du véhicule.

2. Carrosserie de véhicule (1) selon la revendication 1, **caractérisée en ce que** le châssis de rigidification (2) est formé par un châssis de rigidification (2) disposé du côté arrière.

3. Carrosserie de véhicule (1) selon la revendication 1 ou 2, **caractérisée en ce que** les structures de colonne (3, 4) du châssis de rigidification (2) sont supportées à chaque fois sur une structure de support proche du sol sous la forme d'une structure de passage de roue arrière (5, 6) de la carrosserie du véhicule (1).

4. Carrosserie de véhicule (1) selon l'une quelconque des revendications 1 à 3, **caractérisée en ce que** le profilé creux de section transversale ouverte vers l'intérieur du véhicule du châssis de rigidification (2) est formé par un profilé en U ou en V.

5. Carrosserie de véhicule (1) selon l'une quelconque des revendications 1 à 4, **caractérisée en ce que** la bride (12) saillant vers l'arrière du véhicule de la traverse de toit (8) est prévue pour la fixation pivotante d'un hayon arrière (19).

6. Carrosserie de véhicule (1) selon l'une quelconque des revendications 1 à 5, **caractérisée en ce qu'**au niveau de l'arête avant (14) de l'une de chaque structure de colonne (3, 4) du châssis de rigidification (2) est raccordée une partie de paroi latérale (15, 16).

7. Carrosserie de véhicule (1) selon l'une quelconque des revendications 1 à 6, **caractérisée en ce que** dans le profilé creux de section transversale ouverte vers l'intérieur du véhicule du châssis de rigidification (2) sont disposés un ou plusieurs éléments encastrés et/ou un ou plusieurs composants encastrés, tels que des lignes électriques, des composants d'un système de ceinture de sécurité, d'un émetteur sonore et/ou similaires.

8. Véhicule, en particulier véhicule de transport de personnes, comprenant une carrosserie de véhicule (1) selon l'une quelconque des revendications 1 à 7.
